# EUROPEAN PATENT APPLICATION

(11) **EP 4 491 497 A1**
(43) Date of publication of application: **15.01.2025**
(21) Application number: 24184229.3
(22) Date of filing: 25.06.2024
(51) Int. Cl.: B62D 57/032, B25J 9/16, G06T 13/40

(54) **APPARATUS, SYSTEMS AND METHODS FOR ROBOTICS**

(30) Priority: 13.07.2023 GB 202310769
(71) Applicant: Sony Interactive Entertainment Inc., Tokyo 108-0075 (JP)
(72) Inventor: MONTI, Maria Chiara, London, W1F 7LP (GB); GOLDMAN, Daniel, London, W1F 7LP (GB); SHAPIRO, Kalila Adir, London, W1F 7LP (GB)
(74) Representative: D Young & Co LLP

(57) **Abstract**

A data processing apparatus comprises image processing circuitry to generate images for display comprising a virtual body comprising one or more virtual limbs, image analysis circuitry to generate virtual body configuration information indicative of one or more first sets of joint positions for the virtual body in one or more of the images, and a machine learning model to receive the virtual body configuration information and trained to map at least one first set of joint positions for the virtual body to a second set of joint positions for a robotic device comprising a plurality of joints, wherein the processing device is configured to output control information in dependence on the second set of joint positions for controlling one or more actuators of the robotic device.

## Description

### Field of the Disclosure

The present disclosure relates to the field of robotics. In particular, the present disclosure relates to apparatus, systems and methods for robotic device control using images comprising a virtual body.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Robotic devices have become more prevalent and the range of motion that it is possible has increased over the years. Advances in robot capabilities have been achieved through developments such as increasing the number of movable components and the ranges of motion that are available for movable components. There are thus a wide range of robots available with ranging capabilities. Robots with enhanced capabilities and complex behaviours generally require suitably complex inputs. Conversely, robots with reduced capabilities and simple behaviours generally involve the use of simple inputs. Accordingly, this can represent a barrier to potential usability of robotic devices. It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram showing front and rear elevations of a robot;
Figure 2 is a schematic diagram showing front and rear elevations of points of articulation of a robot;
Figure 3 is a schematic diagram illustrating degrees of freedom at respective points of articulation of a robot;
Figure 4 is a schematic diagram of a control system for a robot;
Figure 5 is a schematic diagram of a processing device in accordance with embodiments of the disclosure;
Figures 6a and 6b are schematic diagrams illustrating examples of sets of joint positions;
Figure 7 is a schematic diagram of a system in accordance with embodiments of the disclosure; and
Figure 8 is a schematic flowchart illustrating a method.

Embodiments of the invention will now be described, by way of example only, with reference to the accompanying drawings.

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

A robot platform for implementing embodiments of the present disclosure may take the form of any suitable robotic device.

The robot platform may have any suitable physical features. Hence movement, where required, may be achieved by articulated limbs, wheels, tracks, internal mass displacement or any other suitable means. Manipulation, where required, may be achieved by one or more of a mechanical hand, pincer or any other hooking or gripping system, such as a suction or electromagnetic attachment mechanism or a hook or clip, and any further optional articulation such as one or more jointed arms. Vision, where required, may be achieved by optical camera and/or infra-red camera/detector, mounted on the robot and/or located within the environment navigated by the robot. Other situational awareness systems such as ultrasound echolocation, or detection of metal tracks and/or electrically charged tracks, and proximity systems such as whiskers coupled to sensors, or pressure pads, may also be considered. Control of the robot may be provided by running suitable software instructions on a processor of the robot and/or a processor of a remote computer communicating with the robot, for example via a wireless protocol.

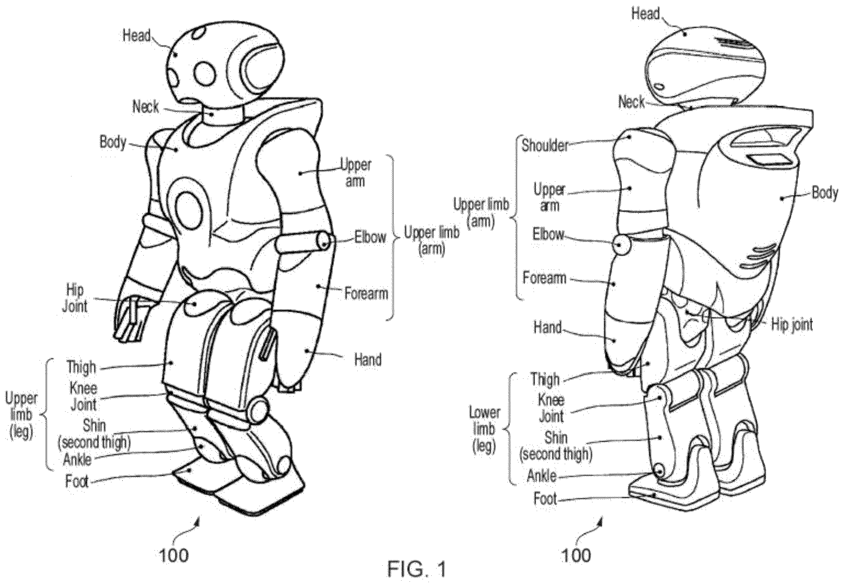

Figure 1 illustrates front and rear views of an exemplary two-legged locomotive robot platform 100. As shown, the robot includes a body, head, right and left upper limbs, and right and left lower limbs for legged movement. Control circuitry (not shown in Figure 1) within the body provides a control system for the robot.

In the example of Figure 1, each of the right and left lower limbs includes a thigh, knee joint, second thigh (calf/shin), ankle and foot. The lower limb is coupled by a hip joint to the bottom of the trunk. Each of the right and left upper limb includes an upper arm, elbow joint and forearm. The upper limb is coupled by a shoulder joint to each upper edge of the trunk. Meanwhile, the head is coupled by a neck joint near to the upper end centre of the trunk.

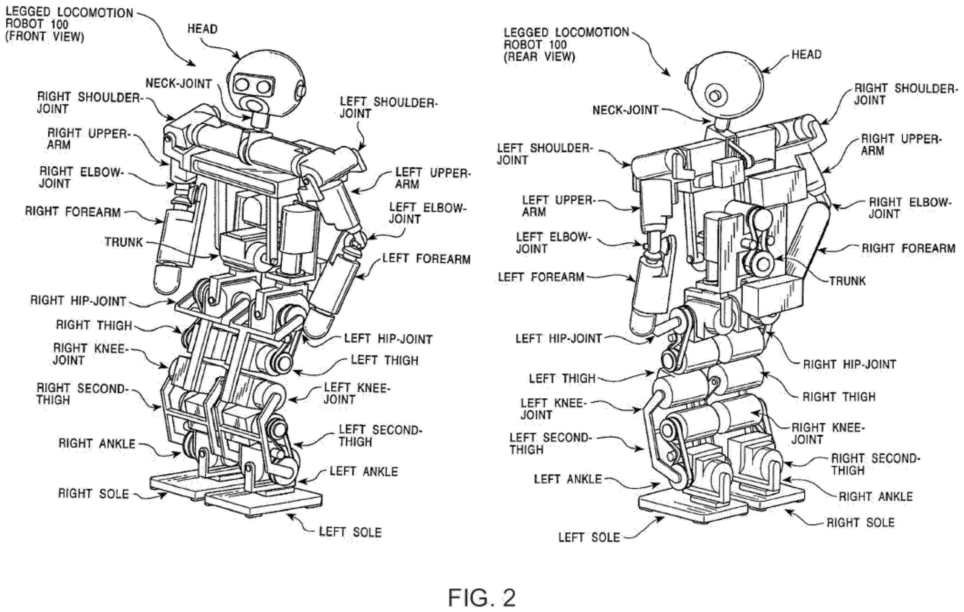

Figure 2 illustrates front and rear views of the robotic device of Figure 1, showing its points of articulation (other than the hands).

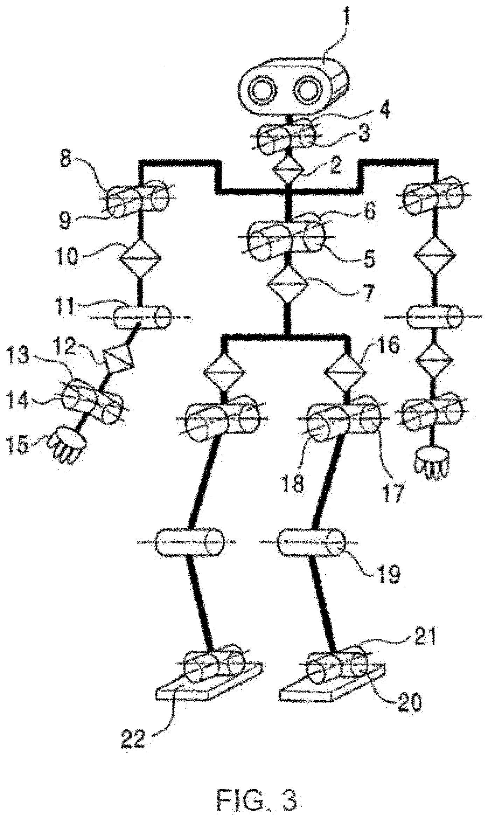

Figure 3 then illustrates the degrees of freedom available for each point of articulation.

Referring to these Figures, a neck joint for supporting the head 1 has 3 degrees of freedom: a neck-joint yaw-axis 2, a neck-joint pitch-axis 3, and a neck-joint roll-axis 4. Meanwhile each arm has 7 degrees of freedom; a shoulder-joint pitch-axis 8, a shoulder-joint roll-axis 9, an upper-arm yaw-axis 10, an elbow-joint pitch-axis 11, a forearm yaw-axis 12, a wrist-joint pitch-axis 13, a wrist-joint roll-axis 14, and a hand 15. Typically the hand 15 also has a multi-joints multi-degrees-of-freedom structure including a plurality of fingers. However, these are omitted for simplicity of explanation. The trunk has 3 degrees of freedom; a trunk pitch-axis 5, a trunk roll-axis 6, and a trunk yaw-axis 7. Each leg constituting the lower limbs has 6 degrees of freedom; a hip-joint yaw-axis 16, a hip-joint pitch-axis 17, a hip-joint roll-axis 18, a knee-joint pitch-axis 19, an anklejoint pitch-axis 20, an ankle-joint roll-axis 21, and a foot 22. In the exemplary robot platform, the cross point between the hip-joint pitch-axis 17 and the hip-joint roll-axis 18 defines a hip-joint location of the legged walking robot 100 according to the embodiment. Again for simplicity it is assumed that the foot itself has no degrees of freedom, but of course this is non-limiting. As a result the exemplary robot 100 has 32 (= 3 + 7 × 2 + 3 + 6 × 2) degrees of freedom in total. It will be appreciated however that this is merely exemplary, and other robot platforms may have more or fewer degrees of freedom.

Each degree of freedom of the exemplary legged locomotive robot platform 100 is implemented by using at least one actuator. For example, a small AC servo actuator that is directly coupled to a gear and that houses a one-chip servo-system may be used, although any suitable actuator may be considered, such as a linear servo, electroactive polymer muscle, pneumatic, piezoelectric, or the like.

It will be appreciated that any desired action that the robot platform is capable of may be implemented by control signals issued by a control system to one or more of the actuators of the robot (or to simulated actuators in a simulation, as applicable), to adjust the configuration (pose) of the robot within its available degrees of freedom.

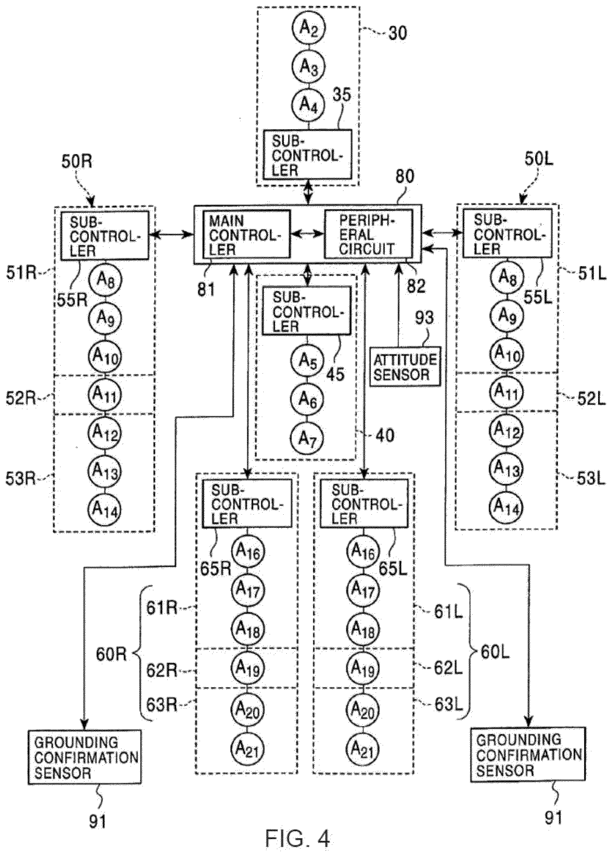

Figure 4 schematically illustrates an exemplary control system for the robot platform 100.

A control unit 80 operates to co-ordinate the overall motion / actions of the robot. The control unit 80 has main controller circuitry 81 including main circuit components (not shown) such as a CPU (central processing unit) and a memory, and typically peripheral circuitry 82 including an interface (not shown) for sending and receiving data and/or commands to and from a power supply circuit (not shown) and each component of the robot. The control unit may comprise a communication interface and communication device for receiving data and/or commands by remote-controlling. The control unit can be located anywhere suitable within the robot.

As shown in Figure 4, the robot can be considered as having logical units 30 (head), 40 (torso), and 50R/L and 60R/L each representing the corresponding one of four human limbs. The degrees-of-freedom of the robot 100 shown in Figure 3 can be implemented by one or more corresponding actuators within each unit. Hence the head unit 30 has a neck-joint yaw-axis actuator A2, a neck-joint pitch-axis actuator A3, and a neck-joint roll-axis actuator A4 disposed therein for representing the neck-joint yaw-axis 2, the neck-joint pitch-axis 3, and the neck-joint roll-axis 4, respectively. Meanwhile the trunk unit 40 has a trunk pitch-axis actuator A5, a trunk roll-axis actuator A6, and a trunk yaw-axis actuator A7 disposed therein for representing the trunk pitch-axis 5, the trunk roll-axis 6, and the trunk yaw-axis 7, respectively. Similarly the arm units 50R/L are broken down into upper-arm units 51R/L, elbow-joint units 52R/L, and forearm units 53R/L. Each of the arm units 50R/L has a shoulder-joint pitch-axis actuator A8, a shoulder-joint roll-axis actuator A9, an upper-arm yaw-axis actuator A10, an elbow-joint pitch-axis actuator A11, an elbow-joint roll-axis actuator A12, a wrist-joint pitch-axis actuator A13, and a wrist-joint roll-axis actuator A14 disposed therein for representing the shoulder-joint pitch-axis 8, the shoulder-joint roll-axis 9, the upper-arm yaw-axis 10, the elbow-joint pitch-axis 11, an elbow-joint roll-axis 12, the wrist-joint pitch-axis 13, and the wrist-joint roll-axis 14, respectively. Finally the leg units 60R/L are broken down into thigh units 61R/L, knee units 62R/L, and second-thigh units 63R/L. Each of the leg units 60 R/L has a hip-joint yaw-axis actuator A16, a hip-joint pitch-axis actuator A17, a hip-joint roll-axis actuator A18, a knee-joint pitch-axis actuator A19, an ankle-joint pitch-axis actuator A20, and an ankle-joint roll-axis actuator A21disposed therein for representing the hip-joint yaw-axis 16, the hip-joint pitch-axis 17, the hip-joint roll-axis 18, the knee-joint pitch-axis 19, the ankle-joint pitch-axis 20, and the ankle-joint roll-axis 21, respectively. Optionally the head unit 30, the trunk unit 40, the arm units 50, and the leg units 60 may have sub-controllers 35, 45, 55, and 65 for driving the corresponding actuators disposed therein.

Hence by issuing appropriate commands, the main controller (81) can control the driving of the joint actuators included in the robot 100 to implement the desired action. For example, the controller may implement a walking action by implementing successive phases, as follows:
(1) Single support phase (left leg) with the right leg off the walking surface;
(2) Double support phase with the right foot touching the walking surface;
(3) Single support phase (right leg) with the left leg off the walking surface; and
(4) Double support phase with the left foot touching the walking surface.

Each phase in turn comprises the control of a plurality of actuators, both within the relevant leg and potentially elsewhere in the robot, for example moving the opposing arm and/or attitude of the torso to maintain the centre of gravity of the robot over the supporting foot or feet.

Optionally, to detect the manner and/or extent of a physical interaction with an object and/or the environment, physical sensors may be provided.

Hence in the exemplary robot, the feet 22 have grounding detection sensors 91 and 92 (e.g. a proximity sensor or microswitch) for detecting the grounding of the feet 22 mounted on legs 60R and 60L respectively, and the torso is provided with an attitude sensor 93 (e.g. an acceleration sensor and/or a gyro-sensor) for measuring the trunk attitude. Outputs of the grounding detection sensors 91 and 92 are used to determine whether each of the right and left legs is in a standing state or a swinging state during the walking action, whilst an output of the attitude sensor 93 is used to detect an inclination and an attitude of the trunk. Other sensors may also be provided, for example on a gripping component of the robot, to detect that an object is being held.

The robot may also be equipped with sensors to provide additional senses. Hence for example the robot may be equipped with one or more cameras, enabling the control unit (or a remote system to which sensor-based data is sent) to recognise a user of the robot, or a target object for retrieval. Similarly one or more microphones may be provided to enable voice control or interaction by a user. Any other suitable sensor may be provided, according to the robot's intended purpose. For example, a security robot intended to patrol a property may include heat and smoke sensors, and GPS.

Hence more generally, a robot platform may comprise any suitable form factor and comprise those degrees of freedom necessary to perform an intended task or tasks, achieved by the use of corresponding actuators that respond to control signals from a local or remote controller that in turn operates under suitable software instruction to generate a series of control signals corresponding to a performance of the intended task(s).

In order to provide software instruction to generate such control signals, a robot software development system may be provided for developing control sequences for desired actions, and/or for developing decision making logic to enable the robot control system to respond to user commands and/or environmental features.

As part of this development system, a virtual robot (i.e. a simulation) may be used in order to simplify the process of implementing test software (for example by avoiding the need to embed test software within robot hardware that may not have simple user-serviceable parts, or to simulate an environment or action where a mistake in the software could damage a real robot). The virtual robot may be characterised by the dimensions and degrees of freedom of the robot, etc., and an interpreter or API operable to respond to control signals to adjust the state of the virtual robot accordingly.

Control software and/or scripts to use with such software may then be developed using, and to use, any suitable techniques, including rule based / procedural methods, and/or machine learning / neural network based methods.

A robot platform for implementing embodiments of the present disclosure may take the form of any suitable robotic device. A robot platform such as the exemplary platforms 100 described previously may be used for the purposes of explanation.

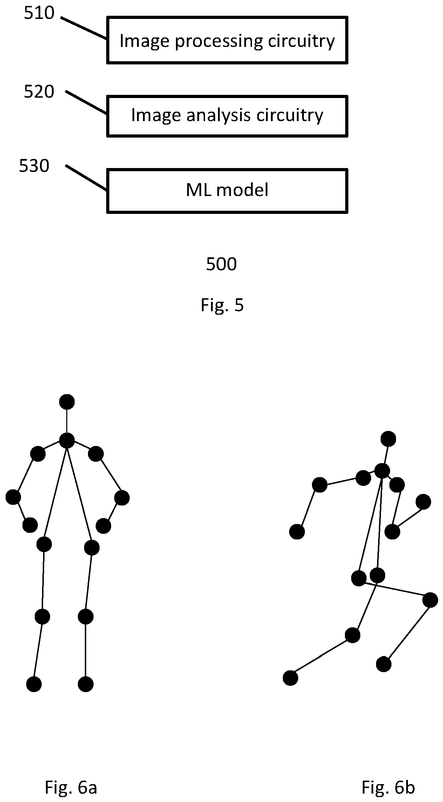

Referring now to Figure 5, a processing device 500 in accordance with embodiments of the disclosure comprises image processing circuitry 510, image analysis circuitry 520 and a machine learning (ML) model 530. The processing device may be provided as part of a general purpose computer operating under suitable software instructions, such as the Sony^{®} PlayStation 5^{®}. The processing device is operable to output control information for controlling one or more actuators of a robotic device. The processing device is operable to output the control information via one or more of a wired and/or wireless communication for reception by at least one robotic device. In some examples, a wireless communication according to the BluetoothOO communication protocol may be used such that the processing device wirelessly transmits the control information directly to a robotic device. Alternatively, in some examples the processing device may wirelessly transmit the control information to a robotic device via one or more intermediate communication devices. Alternatively or in addition, a wired communication (e.g. using the USB communication protocol) may be used.

In the techniques to be discussed below, operations performed by the processing device 500 allow images generated by the image processing circuitry 510 to be processed for obtaining control information for driving one or more actuators of a robotic device in a manner such that the robotic device can be driven according to a configuration associated with a virtual body represented in one or more of the images.

As explained below, the virtual body and the robotic device may have any suitable form and in some cases may have a same or different number of joints. The processing device 500 of the present disclosure can be of particular benefit for allowing a virtual body to be used for driving a robotic device in cases where the two entities (the virtual body and the robotic device) have one or more disparities in terms of the capabilities such as a different number of joints and/or different number of limbs and/or different number of legs, or more generally different degrees of freedom. Aspects of the processing device 500 will now be introduced.

The image processing circuitry 510 is configured to generate images for display comprising a virtual body comprising one or more virtual limbs. The image processing circuitry (e.g. a CPU and/or GPU) may for example generate images for display of an interactive content such as a video game executed by one or more of the processing device and a remote server. In some examples, the processing device is an entertainment device, such as the Sony^{®} PlayStation 5^{®}, operable to execute a video game in accordance with user inputs. In other examples, the image processing circuitry may generate images for a content such as an animated movie which may be streamed or downloaded.

The generated images comprise at least the virtual body comprising one or more virtual limbs. The virtual body may have any suitable body plan having any suitable number of limbs and legs. As explained in more detail later, the virtual body may be one of a two-legged body plan (biped) that uses two legs for walking and a four-legged body plan (quadruped) that uses four legs for walking. The virtual body may correspond to a virtual character in a video game such as a two-legged humanoid avatar or a four-legged dog-like avatar, for example. Similarly, the virtual body may correspond to a virtual character such as a kangaroo avatar (as another example of a two-legged body plan) or a horse avatar or lion avatar (as other examples of four-legged bodies) and so on.

More generally, the virtual body can take a number of forms and comprises one or more virtual limbs. Images generated by the image processing circuitry comprise visual representations of the virtual body in various different configurations as the virtual body moves. The virtual body may for example be a player controlled character in a video game. For example, a player operating a controller device (e.g. handheld video game controller, such as a DualSense^{®} controller) connected to the processing device 500 may provide user inputs for controlling the virtual body, for example to move within a virtual environment and perform various tasks under the control of the user. Alternatively, the virtual body may be controlled by another player (e.g. a remote user) using peer-to-peer gaming techniques and/or cloud gaming techniques. Alternatively to this, the virtual body may correspond to a non-player character (NPC) in a video game such that the virtual body is automatically controlled by a program. Examples in which the virtual body is controlled in accordance with user input from a controller associated with the processing device 500 are discussed in more detail later.

The image analysis circuitry 520 is configured to generate virtual body configuration information indicative of one or more sets of joint positions for the virtual body in one or more of the images. Image analysis with respect to at least some of the images generated by the image processing circuitry 510 can be performed to detect the virtual body and extract joint positions for some or all of the joints associated with the virtual body. Computer vision algorithms for pose estimation may be employed for this purpose. An example of this is the OpenPose algorithm which can allow real-time 2D and/or 3D pose estimation from images. In the case of a two-legged body, then computer vision based biped (e.g. human) pose estimation can be used for extracting a set of joints from at least one of the images. In the case of a four-legged body, then computer vision based quadruped pose estimation can be used for extracting a set of joints from at least one of the images. Examples of suitable vision-based quadruped pose estimation techniques are disclosed in Gong et al., "Vison-based Quadruped Pose Estimation and Gait Parameter Extraction Method", Electronics 2022, 11(22), 3702, which can be found at https://doi.org/10.3390/electronics11223702, the entire contents of which are incorporated by reference. More generally, one or more computer vision algorithms can be used for extracting one or more sets of joint positions from one or more of the images generated by the image processing circuitry 510, and any suitable computer vision algorithm may be used.

The image analysis circuitry 520 is operable to generate virtual body configuration information indicative of one or more first sets of joint positions for the virtual body in one or more of the images. In the following discussion, the term "first set of joint positions" is used to refer to a set of joint positions obtained for the virtual body from analysis of an image including the virtual body. The virtual body configuration information for the virtual body may be indicative of a first set of joint positions for the virtual body in a first image and another first set of joint positions for the virtual body in another image subsequent to (and optionally successive to) the first image.

In some examples, each of the images generated by the image processing circuitry 510 may be used to obtain a respective first set of joint positions, or a subset of the images generated by the image processing circuitry 510 may be used. For example, one in every N images (where N is an integer value in the range 2 to 10, for example) may be analysed by the image analysis circuitry 520. Hence, the virtual body configuration information may be indicative of respective first sets of joint positions extracted from the generated images at regular intervals. In other examples, a respective first set of joint positions may be obtained for each image of a sequence of images generated by the image processing circuitry.

For example, the image processing circuitry 510 may generate the images according to any suitable frame rate for display by a display device such as one or more of a television and a head mountable display (HMD). In some examples, a frame rate of e.g. 60 Hz may be used and the virtual body configuration information may be generated accordingly so that first sets of joint positions are generated at a same frame rate as the images or at a reduced frame rate. In some examples, the image frames may be generated at 60 Hz (or 120 Hz or a value there between) and a first set of joint positions may be generated for 1 in every 2 image frames, or one in every 3, 4, 5 (and so on) image frames. One or more such first sets of joints positions can thus specify a configuration of the virtual body at one or more points in time.

More generally, an image frame can be analysed to obtain a first set of joint positions for defining a configuration of the virtual body at a given point in time. A sequence of image frames (which may be consecutive image frames or regularly spaced image frames such as one in every N as discussed above) can be processed to obtain a plurality of respective first sets of joint positions which define a plurality of configurations of the virtual body and can thus represent an action of the virtual body over a period of time. As explained in more detail later, in the techniques of the present disclosure at least one first set of joint positions can be used by the machine learning model 530 for mapping to a second set of joint positions for a robotic device comprising a plurality of joints. The term "a second set of joint positions" is used to refer to a set of joint positions that is output by the trained machine learning model 530 in response to an input comprising at least one first set of joint positions for the virtual body. The first set of joint positions and the second set of joint positions may comprise a same or different number of joints, as discussed in more detail later. In some arrangements, a plurality of respective first sets of joint positions may be input to the machine learning model 530 for mapping to one or more second sets of joint positions for the robotic device.

The virtual body configuration information indicative of at least one first set of j oint positions for the virtual body is input to the machine learning model 530. The machine learning (ML) model 530 has been trained to map at least one first set of joint positions for the virtual body to a second set of joint positions for a robotic device comprising a plurality of joints. Hence, in response to an input comprising at least one first set of joint positions, the machine learning model 530 outputs a second set of joint positions.

The processing device is operable to output control information in dependence on the second set of joint positions for controlling one or more actuators of the robotic device. In particular, in response to the second set of joint positions, the processing device is operable to output control information comprising one or more control parameters (e.g. speed, direction, torque and/or angle parameters) for controlling one or more actuators of the robotic device to control the robotic device in accordance with the second set of joint positions. For example, the second set of joint positions may specify relative joint positions for the robotic device and control parameters can be computed on this basis. The processing device may thus comprise any suitable processing circuitry for calculating one or more control parameters in dependence on a second set of joints output by the machine learning model for driving the robotic device according to the second set of joints.

The virtual body configuration information may comprise a first set of joint positions in a 2D plane or a 3D space, and may comprise joints such as ankle, knee, hip, elbow, wrist, neck and/or shoulder joints. For example, the virtual body configuration information may compromise 2D or 3D coordinates for each joint of the set of joints. Figures 6a and 6b schematically illustrate examples of two respective sets of 2D joint positions that may be obtained by the image analysis circuitry 520 and input to the machine learning model 530.

Figure 6a illustrates an example of a first set of joint positions obtained from a given image in which the virtual body is a humanoid body comprising two legs and two arms and adopts a natural standing body configuration. Figure 6b illustrates an example of another first set of joint positions obtained from another image (e.g. an image later or earlier in an image sequence than the above mentioned given image) in which the virtual body is a humanoid body having a running body configuration. In response to an input comprising virtual body configuration information indicative of the first set of joint positions shown in Figure 6a, the machine learning model (which has been trained according to the techniques to be discussed below) is trained to output a second set of joint positions for the robotic device corresponding to a same configuration type (in this example the neutral standing configuration) as that of the input first set of joint positions. In response to an input comprising virtual body configuration information indicative of the other first set of joint positions shown in Figure 6b, the machine learning model is trained to output another second set of joint positions for the robotic device corresponding to a same configuration type (in this example the running configuration) as that of the input first set of joint positions. The second set of joints may differ from the first set of joints in that the second set of joints comprises a greater or smaller number of joints and/or that the second set of joints corresponds to a different body plan (such as a four-legged body plan) from that of the virtual body. This represents examples of possible body configuration types (e.g. neutral standing and running) for which a set of joint positions can be mapped by the machine learning model 530. It will be appreciated that depending on the input to the machine learning model various body configuration types can similarly be mapped by the machine learning model 530.

In some examples, supervised training techniques may be used for training the machine learning model. Labelled training data comprising sets of joint positions (which may be 2D and/or 3D information) with labels indicating body configuration types can be used for training the machine learning model. Examples of suitable training data and training techniques for training the machine learning model 530 are discussed later.

### Differing Capabilities

In some embodiments of the disclosure, the virtual body comprises a first number of joints that is different to a number of joints of the robotic device. Hence, in some cases the virtual body and the robotic device may have a same body plan (e.g. both two-legged body plans or both four-legged body plans) but may differ in capability due to having different numbers of joints. For example, the virtual body and the robotic device may both correspond to two-legged bodies having different numbers of joints.

The machine learning model can be trained for such cases so as to map a first set of joint positions for the virtual body to a second set of joint positions for the robotic device so that the second set of joint positions represents a reproduction (e.g. approximation) of the first set of joint positions using a smaller or a greater number of joints. Moreover, the machine learning model 530 may be trained to receive an input comprising virtual body configuration information indicative of a first set of joint positions for a virtual body having a first body plan (e.g. two-legged body) and map the input to a second set of joint positions for a robotic device having a same body plan.

Referring again to the example of Figure 6a, in response to the first set of joint positions schematically shown in Figure 6a as corresponding to a humanoid body (as an example of a two-legged body plan), the machine learning model may provide an output comprising a second set of joint positions with fewer or a greater number of joint positions for a robot having a humanoid body. In this way, a potentially more simple or more complex (or more generally, a different capability) virtual body can be used for driving the actuators of a more complex or more simple, respectively, robotic device. This can allow improved usability for robotic devices by allowing robotic devices to be driven by virtual bodies with capabilities different to that of the robotic device. Moreover, the use of the trained machine learning model 530 can potentially allow mapping between the sets of joint positions to be performed with timing characteristics that can allow for controlling of the robot so that the robot appears to a user as mirroring, or at least closely following, the movements of the virtual body.

In some examples, the input to the machine learning model may comprise the first set of joints and a parameter specifying a target number of joints for the second set of joints so that the machine learning model outputs a second set of joints having the target number of joints. Alternatively or in addition, the machine learning model may be trained for outputting a second set of joints having a target number of joints. For example, the machine learning model may be trained according to a number of joints associated with one or more robotic devices that are intended to be used.

In cases where a virtual body and a robotic device have differences in respect of their capabilities, then conventional techniques may generally dictate that movements of the virtual body are not viable inputs for use with the robotic device such that the virtual body and the robotic device are incompatible. In the present disclosure, the use of the trained machine learning model can be particularly beneficial for cases in which the virtual body comprises one or more different capabilities to that of the robotic device. For example, the virtual body may have a number of legs different to that of the robotic device and/or may have a number of joints that is different from a number of joints (e.g. joint actuators) of the robotic device. More generally, the robotic device and the virtual body may have different degrees of freedom for one or more body portions.

In some embodiments of the disclosure, the robotic device may have a number of joints that is smaller than number of joints of the virtual body, and the robotic device and the virtual body may or may not have a same body plan in such cases. In this case the robotic device may be considered as having limited capabilities in comparison to the virtual body. In accordance with the techniques discussed above, the processing device 500 is operable to output the control information for controlling such a robotic device even though the robotic device may have reduced capabilities relative to the virtual body. Moreover, the processing device is operable to output the control information for controlling such a robotic device even in potential cases where there is a significant disparity between the robot capabilities and the virtual body capabilities which generally would be expected to present significant compatibility issues and which may traditionally prevent such a robotic device from being used with the virtual body. The processing device can thus output the control information for controlling a relatively simple robotic device in accordance with movements of a relatively complex virtual body (e.g. a high quality humanoid avatar).

Similarly, in some embodiments of the disclosure the robotic device may have a number of joints that is greater than a number of number of joints of the virtual body. In this case the robotic device may be considered as having more capabilities in comparison to the virtual body. Hence, the processing device can output the control information for controlling a relatively more complex robotic device in accordance with movements of a relatively simple virtual body (e.g. a low quality humanoid avatar).

### Differing Body Plans

In some embodiments of the disclosure, the virtual body has a first body plan and the robotic device has a second body plan. The virtual body and the robotic device may in some cases have different body plans which may differ by having different numbers of legs. The virtual body may comprise M virtual legs, and similarly the robotic device may comprise P articulated legs, where M and P are different. For example, the virtual body may have a first body plan corresponding to a two-legged body plan and the robotic device may have a second body plan corresponding to a four-legged body plan. For example, the virtual body may be a humanoid avatar having four limbs consisting of two arms and two legs, and the robotic device may be a quadruped having four limbs of which each limb is a respective leg (e.g. a robotic dog), or vice versa.

It will be appreciated that for naturally occurring creatures an even number of legs (e.g. two for humans, four for dogs, six for insects such as ants, and eight for spiders) is expected, whereas virtual bodies (such as those in video games) and robotic devices may potentially be created to have any number of limbs and/or legs. The term body plan used herein refers to a number of legs for a body such that two different body plans differ by having at least a different number of legs. Hence, images of a virtual body having a first body plan can be used by the processing device 500 to output control information for controlling a robotic device having a second body plan different from the first body plan. For example, an odd-number legged robot may be controlled responsive to images including an even-number legged virtual body, or vice versa.

The techniques of the present disclosure provide the trained machine learning model 530 such that a first set of joint positions (e.g. as schematically shown in Figures 6a and 6b) for the virtual body obtained from analysis of an image frame can be mapped to a second set of joint positions for a robotic device, in which the virtual body has a first body plan and the robotic device has a second body plan different from the first body plan. In some embodiments of the disclosure, the virtual body is one of a two-legged body and a (four-legged body, and the robotic device is one of a four-legged body and a two-legged body, respectively. Hence, a two-legged virtual body may be used to control a four-legged robotic device, or a four-legged virtual body may be used to control a two-legged robotic device.

Hence, in some embodiments of the disclosure, the machine learning model 530 may be trained so that in response to virtual body configuration information indicative of a first set of joint position for the virtual body having a first body plan (e.g. a humanoid body having two arms and two legs), the machine learning model may provide an output comprising a second set of joint positions for a robotic device having a second body plan (e.g. quadruped having four limbs of which each is a leg), which may have a same, fewer or greater number of joints than the virtual body.

In some embodiments of the disclosure, the virtual body has a first body plan comprising a first number of joints and the robotic device has a second body plan comprising a second number of joints different from the first number of joints. Through use of the image analysis circuitry 520 to obtain a first set of joint positions and the machine learning model 530 that maps the first set of joint positions to a second set of joint positions, the processing device is operable to output the control information for controlling one or more actuators of the robotic device even though the virtual body and the robotic device have different body plans and different numbers of joints.

### Machine Learning Training for Different Body Plans

The machine learning model 530 can be trained to learn to map an input comprising body configuration information indicative of at least one set of j oint positions for a first body plan to another set of j oint position for a second body plan.

The machine learning model can be trained using training data comprising sets of joint positions for a plurality of same body configuration types for a first body plan and a second body plan. Any suitable body configuration types such as running, walking, jumping, crouching and so on may be used.

Referring again to Figures 6a and 6b, the set of joint positions schematically shown in Figure 6a represents a neutral standing configuration for a humanoid body having two legs and two arms. In some embodiments of the disclosure, the training data may comprise a set of joint positions as schematically shown in Figure 6a for a two-legged body and may also comprise corresponding set of joint positions for a four-legged body in a neutral standing configuration. The number of joins may be the same or may differ between the two sets. Similarly, training data may comprise a set of joint positions as schematically shown in Figure 6b for a two-legged body and may also comprise corresponding set of joint positions for a four-legged body in a running configuration. Hence, pairs (in the case of training data for two different body plans) of sets of joint positions for different body plans having a same type of configuration can be used for training purposes. Of course, if further body plans (e.g. a third body plan different from the first and second body plans) is considered, then three of more sets of joint positions for different body plans having a same type of configuration can be used.

Supervised learning techniques using labelled training data comprising sets of joint positions each comprising a label indicating a body configuration type may be used for training of the machine learning model. For a given body configuration type (e.g. walking), the training data may comprise: a first set of joint positions for the first body plan and associated with a given label corresponding to the given body configuration type; and a second set of joint positions for the second body plan and associated with the given label. For each of the body plans, a set of joint positions for that body plan can be labelled for signifying a type of body configuration associated therewith. A same label can be associated with a set of joint positions for one body plan and also associated with a set of joint positions for another body plan for indicating that a same type of body configuration is associated with the two different sets of joint positions. The training data may comprise data for one or more different body configuration types comprising one or more from the list consisting of: a neutral standing configuration; a walking configuration; a running configuration; a crouching configuration; a jumping configuration; and a body roll configuration. Hence a first label may be associated with a neutral standing configuration, a second label may be associated with a walking configuration, a third label may be associated with a running configuration and so on.

In some embodiments of the discourse, the training data comprises a first set of joint positions for a two-legged body and a second set of joint positions for a four-legged body, in which the first and second set of joint positions correspond to a same body configuration type. The training data may comprise one or more body configuration types selected from the list consisting of: a neutral standing configuration for a two-legged body and a four-legged body; a walking configuration for the two-legged body and the four-legged body; a running configuration for the two-legged body and the four-legged body; a crouching configuration for the two-legged body and the four-legged body; a jumping configuration for the two-legged body and the four-legged body; and a body roll configuration for the two-legged body and the four-legged body. More generally, the machine learning model can be trained using training data comprising sets of joint positions for a plurality of corresponding body configuration types for a first body plan and a second body plan.

The machine learning model may thus be trained using labelled training data as described above. The machine learning model can be trained to learn to map an input comprising a set of joint positions for the first body plan (e.g. two-legged body plan) to a set of joint positions for the second body plan (e.g. four-legged body plan) having a same label. Hence, a function for mapping a set of joint positions for a two-legged body having a standing pose to another set of joint positions for a four-legged body having a standing pose can be learned. Moreover, the above mentioned labelled training data can be used for learning functions for various types of body configuration.

Therefore, the machine learning model can be trained to map an input comprising a set of joint positions for a first body plan (e.g. two-legged) to a second set of joint positions for a second body plan (e.g. four-legged), for which the second set of joint positions is representative of the second body plan in a same type of body configuration.

Hence in some examples, the machine learning model 530 can be trained to map an input comprising the set of joints schematically shown in Figure 6a to a neutral standing configuration for a quadruped body plan. A neutral standing configuration for a quadruped body plan can be represented by a set of joint positions with each of the four legs oriented approximately parallel to each other, and approximately orthogonal with respect to a torso portion. In some embodiments of the disclosure, the machine learning model 530 is trained to map an input comprising the set of joints schematically shown in Figure 6b to a running configuration for a quadruped body plan.

In some embodiments of the disclosure, the device is configured to output the control information to the robotic device to cause the robotic device to perform actions for mimicking at least one aspect of an action of the virtual body in one or more of the images. The machine learning can map the first set of joint positons to the second set of joint positions according to the training techniques discussed above so that the control information output in dependence on the second set of joint positions comprises control parameters for driving the robotic device to imitate at least some of the movements of the virtual body. In the case of the virtual body and the robotic device having different body plans, then the control information output in dependence on the second set of joint positions comprises control parameters for driving the robotic device to imitate at least some of the movements of the virtual body by performing movements corresponding to a same configuration type. For example, in the case of a humanoid virtual body performing a walking motion or holding a crouching configuration, the control information can cause a robotic dog (or other similar robot) to perform a walking motion using the four legs or hold a crouching configuration in which the robot's legs bend to bring the torso portion closer to (and potentially into contact with) a surface of a floor on which the robot stands.

Therefore, in the case of the virtual body and the robotic device having first and second body plans, the device can be configured to output the control information to the robotic device to cause the robotic device to perform actions and/or hold configurations corresponding to a same configuration type as that for the virtual body.

In some embodiments of the disclosure, the virtual body configuration information is indicative of a plurality of first sets of joint positions for the virtual body in a plurality of the images, the machine learning model 530 is trained to map at least some of the plurality of first sets of joint positions for the virtual body to a plurality of sequentially ordered second sets of joint positions for the robotic device, the plurality of sequentially ordered second sets of joint positions defining an action sequence for the robotic device. A sequence of first sets of joint positions for the virtual body can be input to the machine learning model for obtaining a sequence of second sets of joint positions for the robotic device. The first sets of joint positions may represent a series of body configurations for a two-legged body performing a certain motion (e.g. a walking motion, running motion, rolling motion, crouching motion), and the second sets of joint positions may represent a series of body configurations for a four-legged body performing that certain motion for the four-legged body. For example, the first sets of joint positions may represent a human walking, and the second sets of joints positions output by the machine learning model may represent a four-legged body performing a walking motion. The processing device can thus output the control information in dependence on at least some of the second sets of joint positions for controlling one or more actuators of the robotic device to thereby control the robotic device to perform the certain motion.

In some embodiments of the disclosure, the machine learning model is trained to map each first set of joint positions for the virtual body to a respective second set of joint positions for the robotic device and the device is configured to output the control information to the robotic device in dependence on each respective second set of joint positions for the robotic device for controlling one or more actuators of the robotic device to perform one or more actions. The image frames may be generated by the image processing circuitry with a frame rate of Z Hz and the sequence of first sets of joint positions may have a same rate or a rate such as Z/N, where N is an integer in the range 2 to 10. Hence, a sequence of first sets of joint positions may be input to the machine learning model, and a corresponding sequence of second sets of joint positions may be output. The control information can be output in dependence on each of the second set of joint positions for the robotic device.

In some embodiments of the disclosure, the device 500 is configured to output the control information to the robotic device in dependence on the plurality of sequentially ordered second sets of joint positions for the robotic device for controlling the robotic device to perform one or more actions with a rate of motion dependent on a rate of motion of the virtual body. The machine learning model can receive the sequence of first sets of joint positions for the virtual body and output the sequence of the second sets of joint positions for the robotic device such that a rate of movement represented in the first sets of joint positions correlates with a rate of movement represented in the second sets of joint positions. Therefore, in response to a given motion (e.g. walking motion) by the virtual body, the rate of the motion can be reflected in the sequence of first joint positions and accordingly represented in the sequence of second joint positions. By virtue of using the second sequence of joint positions for computing the control information, the control information can be output accordingly for controlling the robot to perform an action with a rate of motion that is dependent on that of the virtual body. Hence, a faster rate of motion by the virtual body can result in control information being output that causes a faster rate of motion by the robotic device, and similarly a slower rate of motion by the virtual body can result in control information being output that causes a slower rate of motion by the robotic device.

Optionally, information regarding a speed associated with movements by the virtual body (e.g. time information indicative of a time associated with each of the first sets of joint positions, which may be a timestamp associated with the image from which the set of joint positions has been obtained) may be input to the machine learning model for use in mapping to the second set of joint positions. Such information may be used to map the input to one or more of the second sets of joint positions to be used for outputting the control information for controlling a speed of one or more actions by the robotic device (or a portion of the robotic device) to correspond with a speed of one or more actions by the virtual body (or a portion of the virtual body).

The image processing circuitry 510 may generate images for a virtual reality (VR), augmented reality (AR) or mixed reality (MR) applications and such images can be processed for extraction of one or more of the first sets of joints for the virtual body. Hence, in some examples one or more of the generated images may comprise a virtual environment comprising one or more virtual bodies which move with respect to the virtual environment in response to user inputs.

In some embodiments of the disclosure, the image processing circuitry 510 is configured to generate the images for a video game and the virtual body is controlled in accordance with user inputs. The virtual body represented in the images may be controlled in response to user inputs from an input device such as a pointer input device, a handheld video game control; a head mountable display; and a camera that captures one or more images of a user. The virtual body may be an avatar in a virtual environment that a user controls using one or more devices. For example, camera-based tracking of a user may be used for controlling the virtual body.

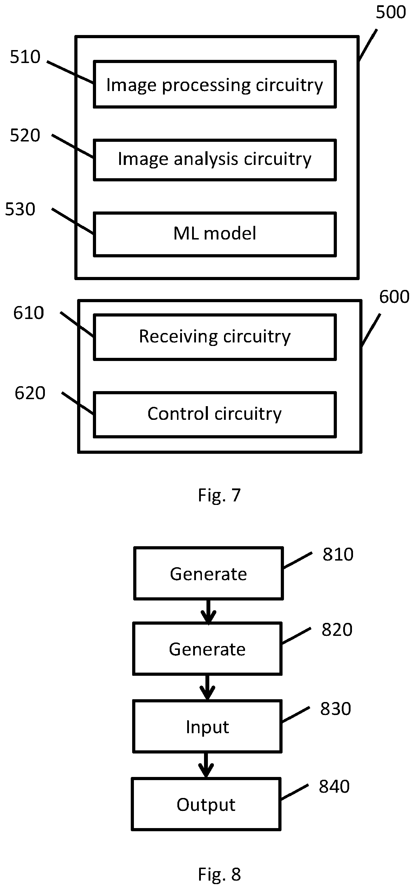

Figure 7 schematically illustrates a system in accordance with embodiments of the disclosure. The system comprises the processing device 500 comprising the image processing circuitry 510, the image analysis circuitry 520 and the machine learning model 530 as discussed already. The system also comprises a robotic device 600. The robotic device 600 comprises receiving circuitry 610 to receive the control information from the processing device 500; and control circuitry 620 to control one or more actuators of the robotic device in response to the control information. The robotic device may take any of the forms discussed previously. In particular, in some cases the robotic device may be one of a two-legged robotic device and a four-legged robotic device.

Figure 8 is a schematic flowchart illustrating a method in accordance with embodiments of the disclosure. The method comprises:
generating (at a step 810) images for display comprising a virtual body comprising one or more virtual limbs;
generating (at a step 820) virtual body configuration information indicative of one or more first sets of joint positions for the virtual body in one or more of the images; and
inputting (at a step 830) the virtual body configuration information to a machine learning model trained to map at least one first set of joint positions for the virtual body to a second set of joint positions for a robotic device comprising a plurality of joints; and
outputting (at a step 840) control information to the robotic device in dependence on the second set of joint positions for controlling one or more actuators of the robotic device.

It will be appreciated that example embodiments can be implemented by computer software operating on a general purpose computing system. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A processing device comprising:
image processing circuitry to generate images for display comprising a virtual body comprising one or more virtual limbs;
image analysis circuitry to generate virtual body configuration information indicative of one or more first sets of joint positions for the virtual body in one or more of the images; and
a machine learning model to receive the virtual body configuration information and trained to map at least one first set of joint positions for the virtual body to a second set of joint positions for a robotic device comprising a plurality of joints, wherein the processing device is configured to output control information in dependence on the second set of joint positions for controlling one or more actuators of the robotic device.

2. The device according to claim 1, wherein the virtual body comprises a first number of joints that is different to a number of joints of the robotic device.

3. The device according to claim 1 or claim 2, wherein the virtual body has a first number of legs and the robotic device has a second number of legs, the first number of legs being different from the second number of legs.

4. The device according to any preceding claim, wherein the virtual body is a two-legged body and the robotic device is four-legged robotic device.

5. The device according to any one of claims 1 to 3, wherein the virtual body is a four-legged body and the robotic device is a two-legged robotic device.

6. The device according to any preceding claim, wherein the machine learning model is trained using training data comprising sets of joint positions for a plurality of same body configuration types for each of a first body having a first number of legs and a second body having a second number of legs.

7. The device according to claim 6, wherein the training data comprises, for a given body configuration type:
a first set of joint positions for the first body and associated with a given label corresponding to the given body configuration type; and
a second set of joint positions for the second body and associated with the given label.

8. The device according to claim 6 or claim 7, wherein the training data comprises first and second sets of joint positions for one or more body configuration types selected from the list consisting of:
a neutral standing configuration for a two-legged body and a four-legged body;
a walking configuration for the two-legged body and the four-legged body;
a running configuration for the two-legged body and the four-legged body;
a crouching configuration for the two-legged body and the four-legged body;
a jumping configuration for the two-legged body and the four-legged body; and
a body roll configuration for the two-legged body and the four-legged body.

9. The device according to any one of claims 7 to 8, wherein the machine learning model is trained to learn to map an input comprising a set of joint positions for the first body to a set of joint positions for the second body having a same label.

10. The device according to any preceding claim, wherein the virtual body configuration information is indicative of a plurality of first sets of joint positions for the virtual body in a plurality of the images, the machine learning model is trained to map at least some of the plurality of first sets of joint positions for the virtual body to a plurality of sequentially ordered second sets of joint positions for the robotic device, the plurality of sequentially ordered second sets of joint positions defining an action sequence for the robotic device.

11. The device according to claim 10, wherein the device is configured to output the control information to the robotic device in dependence on the plurality of sequentially ordered second sets of joint positions for the robotic device for controlling the robotic device to perform one or more actions with a rate of motion dependent on a rate of motion of the virtual body.

12. The device according to any preceding claim, wherein image processing circuitry is configured to generate the images for a video game and the virtual body is controlled in accordance with user inputs.

13. A system comprising:
the processing device according to any preceding claim; and
the robotic device, wherein the robotic device comprises:
receiving circuitry to receive the control information from the processing device; and
control circuitry to control one or more actuators of the robotic device in response to the control information.

14. A method comprising:
generating images for display comprising a virtual body comprising one or more virtual limbs;
generating virtual body configuration information indicative of one or more first sets of joint positions for the virtual body in one or more of the images; and
inputting the virtual body configuration information to a machine learning model trained to map at least one first set of joint positions for the virtual body to a second set of joint positions for a robotic device comprising a plurality of joints; and
outputting control information to the robotic device in dependence on the second set of joint positions for controlling one or more actuators of the robotic device.

15. Computer software which when executed by a computer causes the computer to perform the method according to claim 14.
